# FASCICULE DE BREVET EUROPEEN

(11) **EP 0 786 222 B1**
(45) Date de publication et mention de la délivrance du brevet: **28.06.2000**
(21) Numéro de dépôt: 97400102.6
(22) Date de dépôt: 20.01.1997
(51) Int. Cl.: A47J 37/08

(54) **Procédé de traitement d'un aliment placé dans un grille-pain électrique**
Behandlungsverfahren eines Nahrungsmittels in einem Brotröster
Method for treating a food product in a toaster

(30) Priorité: 29.01.1996 FR 9600999
(43) Date de publication de la demande: 30.07.1997
(73) Titulaire: MOULINEX ESPANA S.A., 08021 Barcelone (ES)
(72) Inventeur: Arnedo, Julian, 08031 Barcelone (ES); Basora, Sanjuan Antonio, 08028 Barcelone (ES)
(74) Mandataire: Busquets, Jean-Pierre

(56) Documents cités:
- WO-A-94/03094
- FR-A- 2 483 725
- PATENT ABSTRACTS OF JAPAN vol. 016, no. 261 (C-0950), 12 Juin 1992 & JP 04 061834 A (MITSUBISHI ELECTRIC HOME APPLIANCE CO LTD;OTHERS: 01), 27 Février 1992,

## Description

La présente invention se rapporte à un procédé de traitement d'un aliment placé dans un grille-pain électrique dont le boîtier comprend au moins une enceinte de grillage avec des moyens de chauffage, un circuit d'alimentation desdits moyens de chauffage piloté par un interrupteur électronique et mis sous tension par l'activation d'un bouton de commande, et qui comprend des premiers moyens de sélection d'au moins un niveau de grillage de l'aliment, des seconds moyens de sélection d'au moins un mode de fonctionnement du circuit d'alimentation lié à une opération de chauffage pour un type d'aliment déterminé et des moyens de commande qui appliquent, en fonction des informations reçues des premiers et seconds moyens de sélection, un signal de commande à l'interrupteur électronique du circuit d'alimentation pendant une durée de fonctionnement T.

Dans les grille-pain connus de ce genre équipés de premiers moyens de sélection d'au moins un niveau de grillage de l'aliment, ainsi que de seconds moyens de sélection d'au moins un mode de fonctionnement du circuit d'alimentation lié à une opération de chauffage sur un type d'aliment déterminé, il s'avère qu'avant la mise sous tension du circuit d'alimentation, l'utilisateur doit activer les premiers et seconds moyens de sélection, pour que l'aliment subisse une certaine opération de chauffage à la fin de laquelle l'aliment présentera un certain niveau de grillage et un certain niveau de consistance correspondant respectivement à un brunissage et à un croustillant qui répondent aux souhaits dudit utilisateur. Un tel procédé de traitement de l'aliment contrôle de manière combinée le brunissage et le croustillant de l'aliment et, de ce fait, l'utilisateur doit contrôler à chaque utilisation les premiers et seconds moyens de sélection pour obtenir le déroulement d'une bonne opération de chauffage.

D'autre part, lors de la mise en oeuvre des procédés de traitement des aliments, les cycles marche-arrêt appliqués aux moyens de chauffage présentent des fréquences qui induisent des harmoniques de courant trop élevés et déclenchent des perturbations sur le réseau électrique, constituant ainsi des gênes pour les utilisateurs branchés sur ledit réseau.

Le but de l'invention est de remédier aux inconvénients précités notamment en limitant les perturbations apportées au réseau électrique et en permettant de contrôler avec ou sans réglage préalable, le chauffage de tout type d'aliment pour lequel un certain brunissage ainsi qu'un certain croustillant est demandé.

Selon l'invention, le bouton de commande ayant été activé, les moyens de commande testent les seconds moyens de sélection pour savoir si une opération de sélection a été entreprise sur lesdits seconds moyens de sélection, dans la négative, les moyens de commande déclenchent automatiquement une opération programmée ; dans l'affirmative, les moyens de commande déclenchent des opérations programmées différentes liées au mode de fonctionnement sélectionné par les seconds moyens et tenant compte des aliments à traiter pour lesquels un certain niveau de grillage et un certain niveau de consistance sont exigés.

Grâce au procédé de traitement de l'aliment selon l'invention, l'utilisateur, sans réglage préalable des premiers et seconds moyens de sélection peut redéclencher, sur un même type d'aliment, une nouvelle opération de chauffage identique à la dernière opération de chauffage programmée pour laquelle un certain niveau de grillage et un certain niveau de consistance de l'aliment avaient été obtenus de façon idéale.

De plus, le niveau de grillage et le niveau de consistance pour des types d'aliments différents sont contrôlés avec une précision remarquable du fait d'une gestion indépendante des opérations et de chauffage déclenchées par l'utilisateur et réalisant un certain niveau de grillage et/ou un certain niveau de consistance de l'aliment. Ainsi, les aliments traités dans le grille-pain sont grillés et consistants selon les goûts de l'utilisateur en assurant une cohérence maximale entre les niveaux de grillage et de consistance sélectionnés par l'utilisateur et les niveaux de grillage et de consistance réellement obtenus.

D'autre part, grâce à ce nouveau procédé, on satisfait aux normes concernant la limitation des perturbations apportées aux réseaux par les appareils électriques notamment les normes EN60555-3, CEI555-3 ainsi que leurs évolutions à venir EN61000-3-3 et CEI-3-3, limitant les variations relatives de tension en fonction du nombre de ces variations par unité de temps sur une source d'indépendance définie par la norme et qui sont la cause des perturbations connues sous le nom de "FLICKER".

Le document Patent Abstracts of Japan vol. 016, no. 261 divulge un procédé de traitement avec des opérations programmées différentes et sélectionnées par moyens de sélection.

Les caractéristiques et avantages de l'invention ressortiront de la description qui va suivre, prise à titre d'exemple non limitatif, en référence aux dessins annexés dans lesquels :

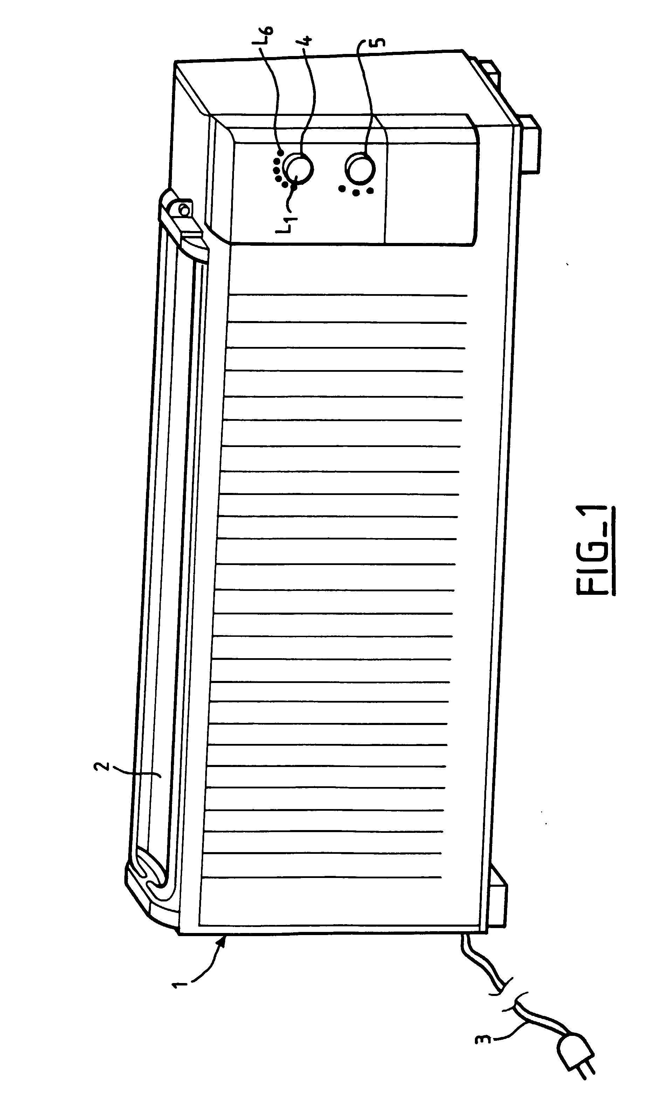

- la figure 1 est une vue schématique en perspective d'un grille-pain auquel est appliquée l'invention ;

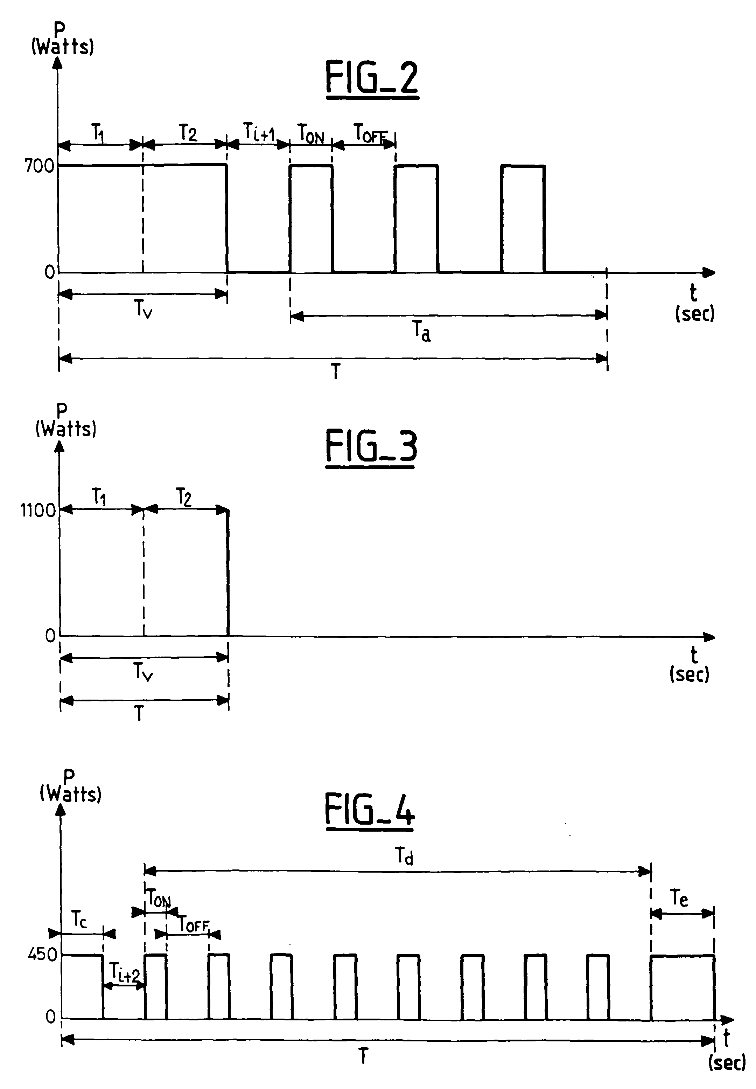

- la figure 2 est une représentation graphique illustrant une séquence d'application d'un signal de commande de l'interrupteur électronique du circuit d'alimentation des moyens de chauffage pendant une durée de fonctionnement T lorsqu'aucune action n'a été déclenchée au moins sur les seconds moyens ;
- la figure 3 est une représentation graphique illustrant une séquence d'application d'un signal de commande de l'interrupteur électronique du circuit d'alimentation des moyens de chauffage pendant une durée de fonctionnement T lorsque les seconds moyens de sélection sont sur une "position express" ;
- la figure 4 est une représentation graphique illustrant une séquence d'application d'un signal de commande de l'interrupteur électronique du circuit d'alimentation des moyens de chauffage pendant une durée de fonctionnement T lorsque les seconds moyens de sélection sont sur une "position sandwich" ;

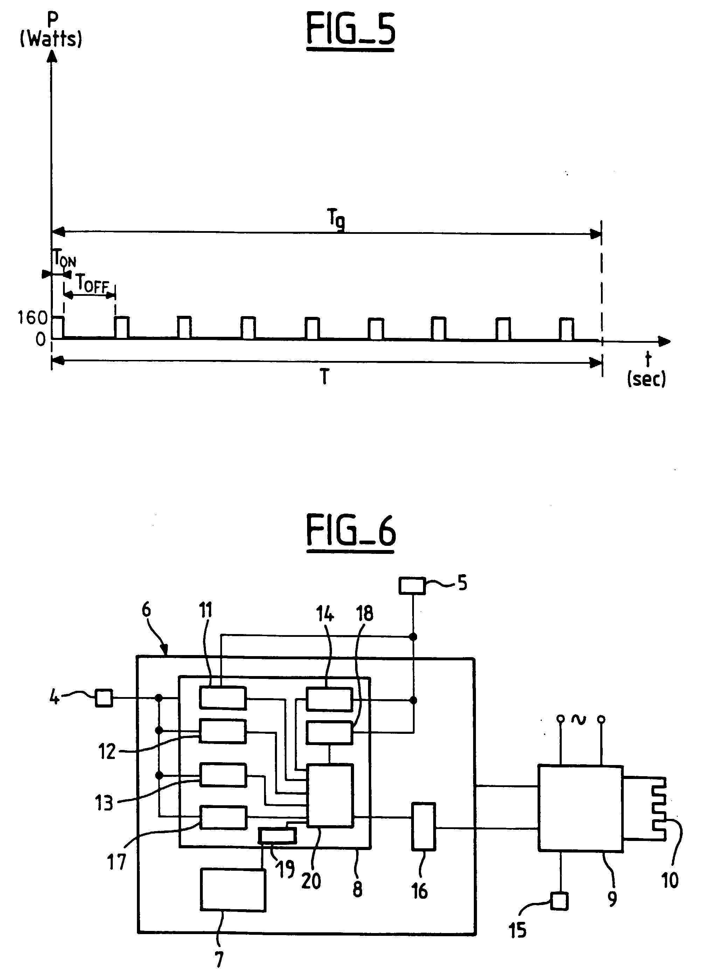

- la figure 5 est une représentation graphique illustrant une séquence d'application d'un signal de commande de l'interrupteur électronique du circuit d'alimentation des moyens de chauffage pendant une durée de fonctionnement T lorsque les seconds moyens de sélection sont sur une "position maintien au chaud" ;
- la figure 6 est une représentation schématique illustrant des moyens de commande fonctionnant selon l'invention et destinés à équiper un grille-pain tel que représenté à la figure 1.

Selon la figure 1, le grille-pain électrique comprend un boîtier 1 comportant au moins une enceinte de grillage 2 avec des moyens de chauffage non représentés, un circuit d'alimentation, non représenté, relié au secteur par une prise 3, et destiné à alimenter les moyens de chauffage ; ledit circuit étant piloté par un interrupteur électronique 16 dont la mise sous tension est commandée par un bouton de commande 15 et qui comprend des premiers moyens de sélection 4 déterminant systématiquement au moins un niveau de grillage d'un aliment tel que des tranches de pain placées à l'intérieur de l'enceinte de grillage 2, des seconds moyens de sélection 5 d'au moins un mode de fonctionnement du circuit d'alimentation lié à une opération de chauffage pour un type d'aliment déterminé et des moyens de commande non représenté qui appliquent, en fonction des informations reçues des premiers et seconds moyens de sélection 4 et 5, un signal de commande à l'interrupteur électronique du circuit d'alimentation pendant une durée de fonctionnement T.

Comme on le voit sur la figure 1, les niveaux de grillage d'un aliment sont définis entre un niveau minimum L1 pour lequel l'aliment est simplement réchauffé avec sensiblement une modification de coloration et un niveau maximum L6 pour lequel l'aliment est très grillé avec une coloration très brunâtre. Les niveaux intermédiaires de grillage sont par exemple des niveaux pour lesquels on a soit une coloration dorée, soit une coloration légèrement brunâtre.

Les niveaux de consistance d'un aliment sont définis entre un niveau minimum pour lequel l'aliment n'est pratiquement pas déshydraté par rapport à son état initial avant traitement et un niveau maximum pour lequel l'aliment est desséché avec un état solide. Un niveau intermédiaire de consistance de l'aliment est par exemple un niveau pour lequel l'aliment est légèrement déshydraté avec un état moelleux.

L'aliment placé à l'intérieur de l'enceinte de grillage du grille-pain est destiné à être traité par la mise en oeuvre du procédé de traitement conforme à l'invention.

Selon l'invention, le procédé de traitement d'un aliment est caractérisé en ce que le bouton de commande ayant été activé, les moyens de commande testent les seconds moyens de sélection pour savoir si une opération de sélection a été entreprise sur lesdits seconds moyens de sélection ; dans la négative, les moyens de commande déclenchent automatiquement une opération programmée et ; dans l'affirmative, les moyens de commande déclenchent des opérations programmées différentes, liées directement , au mode de fonctionnement sélectionné par les seconds moyens et tenant compte des aliments à traiter pour lesquels un certain niveau de grillage et un certain niveau de consistance sont exigés.

On se réfère maintenant à la figure 2 qui représente une séquence d'application d'un signal de commande à l'interrupteur électronique de commande du circuit d'alimentation des moyens de chauffage pendant la durée de fonctionnement T lorsqu'aucune action n'a été déclenchée au moins sur les seconds moyens de sélection.

L'opération programmée comporte successivement une première opération au cours de laquelle les moyens de commande alimentent les moyens de chauffage en continu à une première puissance déterminée P1 pendant une durée Tv liée aux premiers moyens de sélection, une deuxième opération au cours de laquelle les moyens de commande coupent l'alimentation des moyens de chauffage pendant une durée d'interruption Ti+1 et une troisième opération au cours de laquelle les moyens de commande alimentent cycliquement, à ladite première puissance P1, les moyens de chauffage selon un cycle marche-arrêt d'une durée Ta liée aux premiers moyens de sélection et dont la période Tf est constante.

Dans l'exemple de réalisation préférentiel représenté à la figure 2, pendant la durée de fonctionnement T, les moyens de chauffage sont alimentés avec une puissance absorbée P1 de 700 W de manière à obtenir, rapidement un aliment avec un certain niveau de grillage et un certain niveau de consistance.

La durée Tv d'alimentation des moyens de chauffage comprend une durée fixe T1 et une durée variable T2. Ladite durée fixe T1 présente une valeur choisie aux environs de 42 s et la durée variable T2 présente une valeur comprise dans une plage entre 0 et 84 s.

La durée Tv de la première opération étant écoulée, les moyens de commande déclenchent la deuxième opération dont la durée d'interruption Ti+1 présente une valeur de l'ordre de 15 s. La durée Ti+1 étant écoulée, les moyens de commande déclenchent la troisième opération dont la durée Ta présente une valeur comprise dans une plage entre 42 s et 82 s et la période Tf du cycle marche-arrêt des moyens de commande présente un temps de marche T_{ON} et un temps d'arrêt T_{OFF} qui est sensiblement trois fois supérieur au temps de marche T_{ON}. Le temps de marche T_{ON} et le temps d'arrêt T_{OFF} sont choisis respectivement de l'ordre de 6 s et de l'ordre de 15 s.

Une durée Tv sensiblement équivalente à 42 s et une durée Ta sensiblement équivalente à 42 s correspondent à un niveau minimum de grillage L1 et un niveau minimum de consistance tandis qu'une durée Tv sensiblement équivalente à 126 s et une durée Ta sensiblement équivalente à 72 s correspondant à un niveau maximum de grillage L6 et un niveau maximum de consistance.

On se réfère maintenant aux figures 3, 4 et 5 qui représentent, chacune, une séquence d'application d'un signal de commande à l'interrupteur électronique de commande du circuit d'alimentation des moyens de chauffage pendant la durée de fonctionnement T lorsque les seconds moyens de sélection 5 occupent respectivement soit une première position dite "position express", soit une deuxième position dite "position sandwich", soit une troisième position dite "position maintien au chaud".

Comme on le voit sur la figure 3, l'utilisateur ayant activé les seconds moyens de sélection 5 sur la "position express", les moyens de commande déclenchent une seule opération au cours de laquelle les moyens de commande alimentent les moyens de chauffage en continu à une puissance maximale Pm pendant une durée Tm.

Dans l'exemple de réalisation préférentiel représenté à la figure 3, pendant la durée de fonctionnement Tm, les moyens de chauffage sont alimentés avec une puissance absorbée maximale de 1100 W de manière à obtenir le plus rapidement possible un niveau de grillage désiré. La durée Tm présente une durée fixe T3 et une durée variable T4. Ladite durée fixe T3 présente une valeur choisie aux environs de 42 s et la durée variable T4 présente une valeur comprise dans une plage entre 0 et 84 s. Une durée Tm sensiblement équivalente à 42 s correspond au niveau minimum de grillage L1 tandis qu'une durée Tm sensiblement équivalente à 126 s correspond au niveau maximum de grillage L6.

Comme on le voit sur la figure 4, l'utilisateur ayant activé les seconds moyens de sélection- sur la "position sandwich", les moyens de commande déclenchent successivement une première opération au cours de laquelle lesdits moyens de commande alimentent les moyens de chauffage en continu à une deuxième puissance P2 pendant une durée Tc, une deuxième opération au cours de laquelle les moyens de commande coupent l'alimentation des moyens de chauffage pendant une durée d'interruption Ti+2, une troisième opération au cours de laquelle les moyens de commande alimentent cycliquement, à la deuxième puissance P2, les moyens de chauffage selon un cycle marche-arrêt d'une durée Td liée aux premiers moyens de sélection et dont la période Tx est constante et une quatrième opération au cours de laquelle les moyens de commande alimentent, à ladite deuxième puissance P2, les moyens de chauffage en continu pendant une durée Te liée également aux premiers moyens de sélection.

Dans l'exemple de réalisation préférentiel représenté à la figure 4, pendant la durée de fonctionnement T, les moyens de chauffage sont alimentés avec une puissance absorbée de 450 W de manière à ce que l'aliment subisse, au cours de chacune des quatre opérations, un traitement modifiant son grillage et sa consistance.

La durée Tc d'alimentation des moyens de chauffage de la première opération présente une valeur choisie aux environs de 20 s.

La durée Tc étant écoulée, les moyens de commande déclenchent la deuxième opération dont la durée d'interruption Ti+2 présente une valeur choisie aux environs de 20 s. La durée Ti+2 étant écoulée, les moyens de commande déclenchent la troisième opération dont la durée Td présente une valeur comprise dans une plage entre 220 et 250 s. La période Tx présente un temps de marche T_{ON} présentant une valeur choisie aux environs de 9 s et un temps d'arrêt T_{OFF} présentant une valeur choisie aux environs de 20 s. La durée Td étant écoulée, les moyens de commande déclenchent la quatrième opération dont la durée Te présente une valeur comprise dans une plage entre 0 et 30 s.

Au cours du mode de fonctionnement en "position sandwich" généralement utilisé pour traiter des sandwichs au fromage, la première opération permet un préchauffage de l'enceinte de grillage, la deuxième et la troisième opération permettent la fusion du fromage du sandwich et la quatrième opération assure le dorage externe du sandwich.

Comme on le voit sur la figure 5, l'utilisateur ayant activé les seconds moyens de sélection sur la "position maintien au chaud", les moyens de commande déclenchent une seule opération au cours de laquelle lesdits moyens de commande alimentent, cycliquement, à une faible puissance Pf, les moyens de chauffage selon un cycle marche-arrêt d'une durée Tg et dont la période Ty est constante.

Dans l'exemple de réalisation préférentiel représenté à la figure 5, la puissance Pf est voisine de 160 W et la durée Tg présente une valeur choisie aux environs de 10 min et la période Tg présente un temps de marche T_{ON} présentant une valeur choisie aux environs de 10 s et un temps d'arrêt T_{OFF} présentant une valeur choisie aux environs de 60 s.

Ainsi, grâce à la période Tg, la température à l'intérieur de l'enceinte de grillage est voisine de 65°C. De cette manière, l'aliment ne subit plus de modification concernant son grillage et sa consistance mais ledit aliment est maintenu à une certaine température pour laquelle il est chaud.

Comme on le voit sur la figure 6, les moyens de commande 6 comprennent, entre autres, des moyens de mémorisation 7 d'une pluralité de durées Tv, Tm, Ta, Tc, Td et Tg, un circuit de commande 8 de durée de fonctionnement du circuit d'alimentation 9 des moyens de chauffage 10 comportant un premier compteur 11 déterminant une durée Tv en fonction des premiers moyens de sélection 4, un deuxième compteur 12 déterminant une durée Tm en fonction des premiers moyens de sélection 4, un troisième compteur 13 déterminant une durée Tg en fonction des premiers moyens de sélection 4, un quatrième compteur 14 déterminant une durée Tc du circuit d'alimentation 9 des moyens de chauffage 10, un cinquième compteur 17 déterminant une durée Td en fonction des premiers moyens de sélection 4, un sixième compteur 18 déterminant une durée Tg du circuit d'alimentation et un septième compteur 19 d'une durée d'arrêt Tr du circuit d'alimentation 9 des moyens de chauffage 10 entre deux périodes successives d'utilisation ainsi que des moyens de calcul 20 entre les durées Tv, Tm, Ta, Tc, Td et Tg et la pluralité des durées Tv, Tm, Td, Tc, Td et Tg des moyens de mémorisation 7 pour définir le signal de commande à appliquer à l'interrupteur électronique 16 du circuit d'alimentation 9 des moyens de chauffage 10. Ladite durée Tr mesurée entre deux périodes successives d'utilisation est stockée dans les moyens de mémorisation 7 et les moyens de calcul 20 comparent ladite durée Tr avec des plages de temps préalablement définies stockées dans lesdits moyens de mémorisation 7 et correspondant chacune à un temps de correction de fonctionnement à appliquer au circuit d'alimentation des moyens de chauffage.

Les moyens de calcul 20 sont constitués, par exemple, par un microcontrôleur 12MC68HCP7 de chez MOTOROLA. Les premiers et seconds moyens de sélection 4 et 5 comportent, entre autres, des potentiomètres reliés par exemple à des boutons rotatifs comme représentés à la figure 1. Tous les moyens de sélection de type connu sont bien sûr utilisables.

Les potentiomètres transmettent les informations aux compteurs activés par l'actionnement des premiers moyens de sélection 4 et/ou les seconds moyens de sélection 5 et reliés, eux-mêmes, aux moyens de calcul 20. La rotation des boutons rotatifs par l'utilisateur détermine un niveau de grillage et de consistance d'un aliment déterminé compte tenu d'un mode de fonctionnement désiré et constitue les informations transmises aux moyens de commande 6 à appliquer à l'interrupteur électronique de commande 16.

Le fonctionnement du procédé de traitement d'un aliment placé dans un grille-pain électrique selon l'invention est donc simple et efficace.

L'utilisateur, après avoir placé un aliment, par exemple une tranche de pain, ou un sandwich au fromage ou un croissant, devant subir une opération de chauffage dans l'enceinte de grillage 2, choisit soit un mode de fonctionnement programmé du circuit d'alimentation des moyens de chauffage et pouvant correspondre à une dernière utilisation, et dans lequel, après avoir réglé ou non le niveau de grillage, l'utilisateur appuie sur le bouton de commande 15 pour déclencher la mise sous tension du circuit d'alimentation 9 des moyens de chauffage 10 ainsi que les moyens de commande 6, soit un mode de fonctionnement particulier dans lequel, après avoir réglé ou non le niveau de grillage, l'utilisateur sélectionne soit la "position express", soit la "position sandwich", soit la "position maintien au chaud" et appuie sur le bouton de commande 15 pour déclencher la mise sous tension du circuit d'alimentation 9 des moyens de chauffage 10 ainsi que les moyens de commande 6.

Compte tenu des modes de fonctionnement désirés, les moyens de commande 6 appliquent, pendant une durée de fonctionnement T, un signal de commande à l'interrupteur 16 du circuit d'alimentation 9 des moyens de chauffage 10 grâce auquel l'aliment est traité en différentes opérations permettant d'obtenir un résultat proche des souhaits de l'utilisateur. Dès que la durée de fonctionnement est écoulée, un signal de commande de fin d'une opération de chauffage et transmis à un dispositif d'éjection connu en soi. L'aliment est éjecté automatiquement de l'enceinte de grillage 2 et les moyens de commande 6 sont désactivés.

Grâce au procédé de traitement de l'invention, l'utilisateur peut redéclencher, sur un même type d'aliment, une nouvelle opération de chauffage déjà programmée et pour laquelle le niveau de grillage et le niveau de consistance étaient contrôlés avec précision.

De plus, le procédé mis en oeuvre dans les grille-pain évite les perturbations "FLICKER" gênantes transmises généralement par les appareils électriques connectées sur le réseau électrique. En effet, grâce à l'invention, dans tous les cas de figure, on ne dépasse jamais 4 commutations/min, ce qui est très inférieur aux normes tolérées. Par conséquent, les grille-pain ainsi équipés peuvent utiliser de fortes puissances tout en satisfaisant les normes électriques internationales.

## Revendications

1. Procédé de traitement d'un aliment placé dans un grille-pain électrique dont le boîtier (1) comprend au moins une enceinte de grillage (2) avec des moyens de chauffage (10), un circuit d'alimentation (9) desdits moyens de chauffage (10) piloté par un interrupteur électronique (16) et mis sous tension par l'activation d'un bouton de commande (15), et qui comprend des premiers moyens de sélection (4) d'au moins un niveau de grillage de l'aliment, des seconds moyens de sélection (5) d'au moins un mode de fonctionnement du circuit d'alimentation (9) lié à une opération de chauffage pour un type d'aliment déterminé et des moyens de commande (6) qui appliquent, en fonction des informations reçues des premiers et seconds moyens de sélection (4 et 5), un signal de commande à l'interrupteur électronique (16) du circuit d'alimentation (9) pendant une durée de fonctionnement T ;
**caractérisé en ce que** le bouton de commande (15) ayant été activé, les moyens de commande (6) testent les seconds moyens de sélection pour savoir si une opération de sélection a été entreprise sur lesdits seconds moyens de sélection (5); dans la négative, les moyens de commande (6) déclenchent automatiquement une opération programmée et ; dans l'affirmative, les moyens de commande (6) déclenchent des opérations programmées différentes, liées directement, au mode de fonctionnement sélectionné par les seconds moyens (5) et tenant compte des aliments à traiter pour lesquels un certain niveau de grillage et un certain niveau de consistance sont exigés.

2. Procédé de traitement d'un aliment selon la revendication 1,
**caractérisé en ce que** l'opération programmée comporte successivement une première opération au cours de laquelle les moyens de commande (6) alimentent les moyens de chauffage en continu à une première puissance déterminée P₁ pendant une durée Tv liée aux premiers moyens de sélection (4) et une deuxième opération au cours de laquelle les moyens de commande (6) coupent l'alimentation des moyens de chauffage pendant une durée d'interruption Ti+1, une deuxième opération au cours de laquelle les moyens de commande (6) alimentent cycliquement, à ladite première puissance P1, les moyens de chauffage (10) selon un cycle marche-arrêt d'une durée Ta liée aux premiers moyens de sélection (4) et dont la période Tf est constante.

3. Procédé de traitement d'un aliment selon la revendication 2,
**caractérisé en ce que** la durée Tv comprend une durée fixe T1 et une durée variable T2.

4. Procédé de traitement d'un aliment selon la revendication 3,
**caractérisé en ce que** la durée fixe T1 présente une valeur choisie aux environs de 42s et la durée variable T2 présente une valeur comprise dans une plage entre 0 et 84s.

5. Procédé de traitement d'un aliment selon la revendication 3 ou 4,
**caractérisé en ce que**, compte tenu de la durée Tv de l'alimentation des moyens de chauffage, la première puissance P1 est voisine de 700 W, la durée d'interruption Ti+1 présente une valeur de l'ordre de 15s, et la durée Ta du cycle marche-arrêt des moyens de chauffage au cours de la troisième opération, présente une valeur comprise dans une plage entre 42 et 82 s et la période Tf présente un temps de marche T_{ON} et un temps d'arrêt T_{OFF}, ce dernier étant sensiblement trois fois supérieur au temps de marche T_{ON}.

6. Procédé de traitement d'un aliment selon la revendication 5,
**caractérisé en ce que** le temps de marche T_{ON} et le temps d'arrêt T_{OFF} sont choisis respectivement de l'ordre de 6s et de l'ordre de 15s.

7. Procédé de traitement d'un aliment selon la revendication 1,
**caractérisé en ce que** les seconds moyens de sélection (5) occupant soit une première position dite "position express" correspondant à un premier mode de fonctionnement du circuit d'alimentation, soit une deuxième position dite "position sandwich" correspondant à un deuxième mode de fonctionnement du circuit d'alimentation, soit une troisième position dite "position main au chaud" correspondant à un troisième mode de fonctionnement du circuit d'alimentation, si l'utilisateur active les seconds moyens de sélection sur la "position express", les moyens de commande (6) déclenchent une seule opération au cours de laquelle lesdits moyens de commande (6) alimentent les moyens de chauffage (10) en continu à une puissance maximale Pm pendant une durée Tm, si l'utilisateur active les seconds moyens de sélection (5) sur la "position sandwich", les moyens de commande (6) déclenchent successivement une première opération au cours de laquelle lesdits moyens de commande (6) alimentent les moyens de chauffage (10) en continu à une deuxième puissance P2 pendant une durée Tc, une deuxième opération au cours de laquelle les moyens de commande (6) coupent l'alimentation des moyens de chauffage (10) pendant une durée d'interruption Ti+2, une troisième opération au cours de laquelle les moyens de commande alimentent cycliquement, à ladite deuxième puissance P2, les moyens de chauffage (10) selon un cycle marche-arrêt d'une durée Td liée aux premiers moyens de sélection (4) et dont la période Tx est constante et une quatrième opération au cours de laquelle les moyens de commande (6) alimentent, à ladite deuxième puissance P2, les moyens de chauffage (10) en continu pendant une durée Te liée aux premiers moyens de sélection (4), et si l'utilisateur active les seconds moyens de sélection (5) sur la position "maintien au chaud", les moyens de commande (6) déclenchent une seule opération au cours de laquelle lesdits moyens de commande (6) alimentent cycliquement, à une faible puissance Pf, les moyens de chauffage (10) selon un cycle marche-arrêt d'une durée Tg et dont la période Ty est constante.

8. Procédé de traitement d'un aliment selon la revendication 7,
**caractérisé en ce que**, pour la "position express", la durée Tm présente une valeur comprise dans une plage entre 42 et 126 s et la puissance maximale Pm est voisine de 1100 W.

9. Procédé de traitement d'un aliment selon la revendication 7,
**caractérisé en ce que**, pour la "position sandwich", la deuxième puissance P2 est voisine de 450 W, la durée Tc présente une valeur choisie aux environs de 20 s, la durée d'interruption Ti+2 présente une valeur choisie aux environs de 20 s, la durée Td présente une valeur comprise dans une plage entre 220 et 250 s et la période Tx présente un temps de marche T_{ON} présentant une valeur choisie aux environs de 9 s et un temps d'arrêt T_{OFF} présentant une valeur choisie aux environs de 20 s et la durée Te présente une valeur comprise dans une plage entre 0 et 30 s.

10. Procédé de traitement d'un aliment selon la revendication 7,
**caractérisé en ce que**, pour la "position maintien au chaud", la puissance Pf est voisine de 160 W, la durée Tg présente une valeur choisie aux environs de 10 min et la période Ty présente un temps de marche T_{ON} présentant une valeur choisie aux environs de 10 s et un temps d'arrêt T_{OFF} présentant une valeur choisie aux environs de 60 s.

## Patentansprüche

1. Verfahren zur Behandlung eines Nahrungsmittels, das sich in einem elektrischen Brotröster befindet, dessen Gehäuse (1) mindestens eine Grillkammer (2) mit einer Heizeinrichtung (10) und einen Versorgungsschaltkreis (9) der Heizeinrichtung (10) aufweist, der durch einen elektronischen Schalter (16) geschaltet wird, dessen Spannungsanschluß von der Aktivierung eines Steuerknopfes (15) gesteuert wird, und der eine erste Auswahleinrichtung (4) für mindestens ein Grillniveau des Nahrungsmittels, eine zweite Auswahleinrichtung (5) für mindestens einen Funktionsmodus des Versorgungsschaltkreises (9), der mit einer Heizoperation für einen bestimmten Nahrungsmitteltyp zusammenhängt, und eine Steuereinrichtung (6) umfaßt, die als Funktion der von der ersten und zweiten Auswahleinrichtung (4 und 5) empfangenen Information während einer Funktionsdauer T ein Steuersignal an den elektronischen Schalter (16) des Versorgungsschaltkreises (9) anlegt, **dadurch gekennzeichnet, daß**, nachdem der Steuerknopf aktiviert worden ist, die Steuereinrichtung (6) die zweite Auswahleinrichtung überprüft, um festzustellen, ob eine Auswahloperation an der zweiten Auswahleinrichtung (5) durchgeführt worden ist; wenn nicht, löst die Steuereinrichtung (6) automatisch eine programmierte Operation aus und wenn ja, löst die Steuereinrichtung (6) unterschiedliche programmierte Operationen aus; die direkt von dem für die zweite Einrichtung (5) ausgewählten Funktionsmodus abhängen und die zu behandelnden Nahrungsmittel berücksichtigen, für die ein bestimmtes Grillniveau und ein bestimmtes Beschaffenheitsniveau gefordert werden.

2. Behandlungsverfahren eines Nahrungsmittels nach Anspruch 1, **dadurch gekennzeichnet, daß** die programmierte Operation aufeinanderfolgend umfaßt: eine erste Operation, in deren Verlauf die Steuereinrichtung (6) die Heizeinrichtung während einer Dauer Tv, die von der ersten Auswahleinrichtung (4) abhängt, kontinuierlich mit einer ersten bestimmten Leistung P₁ versorgt, eine zweite Operation, in deren Verlauf die Steuereinrichtung (6) die Versorgung der Heizeinrichtung während einer Unterbrechungsdauer Ti+1 unterbricht, und eine dritte Operation, in deren Verlauf die Steuereinrichtung (6) die Heizeinrichtung (10) während einer Dauer Ta, die von der ersten Auswahleinrichtung (4) abhängt, zyklisch mit der ersten Leistung Pl gemäß einem Ein-/Ausschaltzyklus versorgt, dessen Periode Tf konstant ist.

3. Behandlungsverfahren eines Nahrungsmittels nach Anspruch 2, **dadurch gekennzeichnet, daß** die Dauer Tv eine feste Dauer T1 und eine variable Dauer T2 umfaßt.

4. Behandlungsverfahren eines Nahrungsmittels nach Anspruch 3, **dadurch gekennzeichnet, daß** die feste Dauer T1 einen ausgewählten Wert im Bereich von 42 Sek. und die variable Dauer T2 einen Wert darstellt, der in einem Bereich zwischen 0 und 84 Sek. liegt.

5. Behandlungsverfahren eines Nahrungsmittels nach Anspruch 3 oder 4, **dadurch gekennzeichnet, daß** unter Berücksichtigung der Dauer Tv der Versorgung der Heizeinrichtung die erste Leistung P₁ etwa bei 700 W liegt, die Unterbrechungsdauer Ti+1 einen Wert der Größenordnung von 15 Sek. darstellt und die Dauer Ta des Ein-/Ausschaltzyklus der Heizeinrichtung im Verlauf der dritten Operation einen Wert darstellt, der in einem Bereich zwischen 42 und 82 Sek. liegt und die Periode Tf eine Einschaltzeit T_{ON} und eine Ausschaltzeit T_{OFF} umfaßt, wobei die letztere etwa dreimal größer als die Einschaltzeit T_{ON} ist.

6. Behandlungsverfahren eines Nahrungsmittels nach dem Anspruch 5, **dadurch gekennzeichnet, daß** die Einschaltzeit T_{ON} und die Ausschaltzeit TOFF in der Größenordnung von 6 Sek. bzw. in der Größenordnung von 15 Sek. ausgewählt sind.

7. Behandlungsverfahren eines Nahrungsmittels nach Anspruch 1, **dadurch gekennzeichnet, daß** die zweite Auswahleinrichtung (5) entweder eine erste Position mit der Bezeichnung "Express"-Position, die einem ersten Funktionsmodus des Versorgungsschaltkreises entspricht, oder eine zweite Position mit der Bezeichnung "Sandwich"-Position, die einem zweiten Funktionsmodus des Versorgungsschaltkreises entspricht, oder eine dritte Position mit der Bezeichnung "Warmhalte"-Position, die einem dritten Funktionsmodus des Versorgungsschaltkreises entspricht, belegt, wobei, wenn der Benutzer die zweite Auswahleinrichtung auf die "Express"-Position einstellt, die Steuereinrichtung (6) eine einzige Operation auslöst, in deren Verlauf die Steuereinrichtung (6) die Heizeinrichtung (10) kontinuierlich mit einer maximalen Leistung Pm während einer Dauer Tm versorgt, wenn der Benutzer die zweite Auswahleinrichtung (5) auf die "Sandwich"-Position einstellt, die Steuereinrichtung (6) aufeinanderfolgend eine erste Operation, in deren Verlauf die Steuereinrichtung (6) die Heizeinrichtung (10) kontinuierlich mit einer zweiten Leistung P2 während einer Dauer Tc versorgt, eine zweite Operation, in deren Verlauf die Steuereinrichtung (6) die Versorgung der Heizeinrichtung (10) für eine Unterbrechungsdauer Ti+2 unterbricht, eine dritte Operation, in deren Verlauf die Steuereinrichtung die Heizeinrichtung (10) während einer Dauer Td, die von der ersten Auswahleinrichtung (4) abhängt zyklisch mit der zweiten Leistung P2 gemäß einem Ein-/Ausschaltzyklus versorgt, dessen Periode Tx konstant ist, und eine vierte Operation auslöst, in deren Verlauf die Steuereinrichtung (6) die Heizeinrichtung (10) während einer Dauer Te, die von der ersten Auswahleinrichtung (4) abhängt, kontinuierlich mit der zweiten Leistung P2 versorgt, und wenn der Benutzer die zweite Auswahleinrichtung (5) auf die "Warmhalte"-Position einstellt, die Steuereinrichtung (6) eine einzige Operation auslöst, in deren Verlauf die Steuereinrichtung (6) die Heizeinrichtung (10) während einer Dauer Tg zyklisch mit einer mittleren Leistung Pf gemäß einem Ein-/Ausschaltzyklus versorgt, dessen Periode Ty konstant ist.

8. Behandlungsverfahren eines Nahrungsmittels nach Anspruch 7, **dadurch gekennzeichnet, daß** bei der "Express"-Position die Dauer Tm einen Wert darstellt, der im Bereich zwischen 42 und 126 Sek. liegt, und die maximale Leistung Pm bei etwa 1100 W liegt.

9. Behandlungsverfahren eines Nahrungsmittels nach Anspruch 7, **dadurch gekennzeichnet, daß** bei der "Sandwich"-Position die zweite Leistung P2 bei etwa 450 W liegt, die Dauer Tc einen ausgewählten Wert im Bereich von 20 Sek. darstellt, die Unterbrechungsdauer Ti+2 einen ausgewählten Wert im Bereich von 20 Sek. darstellt, die Dauer Td einen Wert darstellt, der im Bereich zwischen 220 und 250 Sek. liegt und die Periode Tx eine Einschaltzeit T_{ON}, die einen ausgewählten Wert im Bereich von 9 Sek. darstellt, und eine Ausschaltzeit T_{OFF} umfaßt, die einen ausgewählten Wert im Bereich von 20 Sek. darstellt, und die Dauer Te einen Wert darstellt, der im Bereich zwischen 0 und 30 Sek. liegt.

10. Behandlungsverfahren eines Nahrungsmittels nach Anspruch 7, **dadurch gekennzeichnet, daß** bei der "Warmhalte"-Position die Leistung Pf bei etwa 160 W liegt, die Dauer Tg einen ausgewählten Wert im Bereich von 10 Min. darstellt und die Periode Ty eine Einschaltzeit T_{ON}, die einen ausgewählten Wert im Bereich von 10 Sek. darstellt, und eine Ausschaltzeit T_{OFF} umfaßt, die einen ausgewählten Wert im Bereich von 60 Sek. darstellt.

## Claims

1. Method of treating a food placed in an electric toaster whose casing (1) comprises at least one toasting chamber (2) with heating means (10), a circuit (9) for supplying said heating means (10) controlled by an electronic switch (16) and energised by the activation of a control knob (15), and which comprises first means (4) of selecting at least one toasting level for the food, and second means (5) of selecting at least one operating mode of the supply circuit (9) related to a heating operation for a given type of food and control means (6) which, according to the informations received from the first and second selection means (4 and 5), apply a control signal to the electronic switch (16) of the supply circuit (9) for a duration of operation T;
**characterised in that**, the control knob (15) having been activated, the control means (6) test the second selection means in order to know whether a selection operation has been undertaken on the second selection means (5); in the negative, the control means (6) automatically trigger a programmed operation; and in the affirmative, the control means (6) trigger different programmed operations, related directly to the operating mode selected by the second means (5) and taking account of the food to be treated for which a certain toasting level and a certain level of consistency are required.

2. Method of treating a food according to claim 1,
**characterised in that** the programmed operation includes successively a first operation during which the control means (6) supply the heating means continuously at a first given power P₁ for a duration Tv related to the first selection means (4), a second operation during which the control means (6) cut off the supply to the heating means for a duration of interruption Ti+1, and a third operation during which the control means (6) cyclically supply the heating means (10) at said first power P1 in accordance with a stop-start cycle with a duration Ta related to the first selection means (4) and whose period Tf is constant.

3. Method of treating a food according to claim 2,
**characterised in that** the duration Tv comprises a fixed duration T1 and a variable duration T2.

4. Method of treating a food according to claim 3,
**characterised in that** the fixed duration T1 has a value chosen at approximately 42 secs and the variable duration T2 has a value lying within a range between 0 and 84 secs.

5. Method of treating a food according to claim 3 or 4,
**characterised in that**, having regard to the duration Tv of the supply to the heating means, the first power P1 is around 700 W, the duration of interruption Ti+1 has a value of around 15 secs, and the duration Ta of the stop-start cycle of the heating means during the third operation has a value lying within a range between 42 and 82 secs and the period Tf has an on time T_{ON} and an off time T_{OFF}, the latter being approximately three times greater than the on time T_{ON}.

6. Method of treating a food according to claim 5,
**characterised in that** the on time T_{ON} and the off time T_{OFF} are chosen respectively at around 6 secs and around 15 secs.

7. Method of treating a food according to claim 1,
**characterised in that** the second selection means (5) occupying either a first position known as the "express position" corresponding to a first operating mode of the supply circuit, or a second position known as the "sandwich position" corresponding to a second operating mode of the supply circuit, or a third position known as the "keep warm position" corresponding to a third operating mode of supply circuit, if the user activates the second selection means on the "express position", the control means (6) trigger a single operation during which said control means (6) supply the heating means (7) continuously at a maximum power Pm for a duration Tm, if the user activates the second selection means (5) at the "sandwich position", the control means (6) successively trigger a first operation during which said control means (6) supply the heating means (10) continuously at a second power P2 for a duration Tc, a second operation during which the control means (6) cut off the supply to the heating means (10) for a duration of interruption Ti+2, a third operation during which the control means cyclically supply the heating means (10) at said second power P2 in accordance with a stop-start cycle with a duration Td related to the first selection means (4) and whose period Tx is constant and a fourth operation during which the control means (6) supply the heating means (10) continuously at said second power P2 for a duration Te related to the first selection means (4), and if the user activates the second selection means (5) at the "keep warm position", the control means (6) trigger a single operation during which said control means (6) cyclically supply the heating means (10) at a low power Pf in accordance with a stop-start cycle with a duration Tg and whose period Ty is constant.

8. Method of treating a food according to claim 7,
**characterised in that**, for the "express position", the duration Tm has a value lying within a range between 42 and 126 secs and the maximum power Pm is around 1100 W.

9. Method of treating a food according to claim 7,
**characterised in that**, for the "sandwich position", the second power P2 is around 450 W, the duration Tc has a value chosen at around 20 secs, the duration of interruption Ti+2 has a value chosen at around 20 secs, the duration Td has a value lying within a range between 220 and 250 secs and the period Tx has an on time T_{ON} having a value chosen at around 9 secs and an off time TOFF having a value chosen at around 20 secs and the duration Te has a value lying within a range between 0 and 30 secs.

10. Method of treating a food according to claim 7,
**characterised in that**, for the "keep warm position", the power Pf is around 160 W, the duration Tg has a value chosen at around 10 mins and the period Ty has an on time T_{ON} with a value chosen at around 10 secs and an off time T_{OFF} with a value chosen at around 60 secs.
